Europäisches Patentamt

European Patent Office

Office européen des brevets

(11) Numéro de publication: **0 210 884 B1**

(19)

(12) **FASCICULE DE BREVET EUROPEEN**

(45) Date de publication de fascicule du brevet: **15.07.92**  (51) Int. Cl.⁵: **G05B 19/04**

(21) Numéro de dépôt: **86401352.9**

(22) Date de dépôt: **20.06.86**

(54) **Programmateur pour lave-linge.**

(30) Priorité: **25.06.85 FR 8509651**

(43) Date de publication de la demande:
**04.02.87 Bulletin 87/06**

(45) Mention de la délivrance du brevet:
**15.07.92 Bulletin 92/29**

(84) Etats contractants désignés:
**AT CH DE FR GB IT LI SE**

(56) Documents cités:
**EP-A- 0 054 460     EP-A- 0 098 915
FR-A- 2 365 151     US-A- 3 610 941
US-A- 4 370 566     US-A- 4 449 384
US-A- 4 502 112**

(73) Titulaire: **ESSWEIN S.A.
Route de Cholet
F-85002 La Roche-sur-Yon(FR)**

(72) Inventeur: **Didier, Laurent
THOMSON-CSF SCPI
F-92045 PARIS LA DEFENSE CEDEX 67(FR)**
Inventeur: **Geay, Jean-Claude
THOMSON-CSF SCPI
F-92045 PARIS LA DEFENSE CEDEX 67(FR)**

(74) Mandataire: **Grynwald, Albert et al
THOMSON-CSF SCPI
F-92045 PARIS LA DEFENSE CEDEX 67(FR)**

## Description

L'invention est relative à un programmateur pour lave-linge.

On sait qu'un lave-linge fonctionne de façon entièrement automatique après que l'utilisateur ait sélectionné un programme de lavage. Ce fonctionnement s'effectue sous la commande d'un programmateur.

Il existe deux types de programmateurs l'un électromécanique et l'autre électronique à microprocesseur.

Un programmateur électromécanique comporte un moteur électrique (souvent appelé "micromoteur") entraînant des cames qui coopèrent avec des interrupteurs dont l'état dépend de la position angulaire de ces cames. Les interrupteurs sont utilisés pour commander le fonctionnement des divers organes de la machine, un interrupteur étant par exemple en série avec la résistance de chauffage de l'eau, un autre en série avec l'électrovanne d'alimentation en eau et un autre interrupteur encore en série avec le moteur de la pompe de vidange de la cuve. Par ailleurs un autre interrupteur du programmateur est en série avec le moteur d'entraînement des cames.

Le moteur d'entraînement des cames doit tourner, c'est-à-dire être alimenté en énergie électrique, pour passer d'une opération à la suivante et/ou pour effectuer une opération pendant un temps déterminé. Par exemple quand la température de l'eau de lavage a atteint une valeur prédéterminée un interrupteur sensible à la température en série avec le moteur se ferme et celui-ci tourne pendant un temps préalablement déterminé par la configuration des cames pour que le linge soit brassé pendant ce temps déterminé ; au bout de celui-ci l'interrupteur en série avec la résistance de chauffage de l'eau s'ouvre, de même qu'un interrupteur en série avec le moteur d'entraînement de la came.

Les temps imposés par un programmateur électromécanique sont déterminés par la vitesse de rotation du moteur et par la configuration des cames. Il est clair que ces temps ne peuvent être choisis à volonté, ce qui limite les possibilités de programmation du lave-linge. On a déjà proposé (brevet US 4449 384) un programmateur à moyens électroniques étendant les possibilités de choix des temps. Mais le câblage du lave-linge équipé de ce programmateur est complexe, comme le câblage des lave-linge équipés d'un programmateur électromécanique classique.

Un programmateur du type électronique ne présente pas ces inconvénients : la durée de chaque opération peut être choisie à une valeur quelconque et le câblage est moins complexe. Toutefois un programmateur à microprocesseur est onéreux car il nécessite de nombreux relais à la place des interrupteurs du programmateur électromécanique. En effet un microprocesseur délivre des signaux à basse tension qui sont amplifiés et transmis à des bobines de relais en série avec divers organes du lave-linge : résistance de chauffage, électrovanne, pompe de vidange, moteur d'entraînement du tambour, etc... Par ailleurs on doit prévoir une pile ou un accumulateur pour alimenter le microprocesseur en cas d'interruption de l'alimentation en énergie électrique afin de conserver en mémoire l'état d'exécution du programme au moment de l'interruption afin de reprendre cette exécution au même emplacement lors du rétablissement de l'alimentation; il est vrai que pour remédier à cet inconvénient on peut utiliser des circuits électroniques à basse consommation permettant, par effet capacitif, de conserver en mémoire l'état d'exécution du programme au moment d'une coupure de l'alimentation; mais cette dernière technologie rend le microprocesseur encore plus onéreux.

Dans le brevet français 2 365 151 on a proposé un programmateur comprenant, d'une part, un composant électromécanique à cames et, d'autre part, un microprocesseur commandant le moteur d'entraînement d'un disque d'indexage de position et d'un disque support de programme. Le disque d'indexage de position permet la comparaison entre la position réellement commandée et la position imposée par le microprocesseur. Ce dernier a pour seule fonction la commande du moteur de l'organe électromécanique.

Cette réalisation est également onéreuse.

L'invention remédie à cet inconvénient.

Elle concerne un programmateur de commande de fonctionnement d'un lave-linge comprenant un composant électromécanique à moteur électrique, par exemple du type synchrone, entraînant des cames coopérant avec des interrupteurs ou commutateurs dont l'état dépend de la position angulaire de ces cames et un microprocesseur commandant une partie des durées d'arrêt et/ou de fonctionnement du moteur d'entraînement des cames pour déterminer la durée de fonctionnement d'au moins certaines opérations du lave-linge, au moins une partie des interrupteurs ou commutateurs du composant électromécanique ayant pour seule fonction de représenter l'état d'exécution du programme de lavage, et à cet effet, sont branchés pour appliquer sur des entrées du microprocesseur des signaux qui représentent, selon leur état, ledit état d'exécution. Ce programmateur est caractérisé en ce que le microprocesseur commande directement des organes du lave-linge tels que le moteur d'entraînement du tambour.

En d'autres termes certains organes du lave-linge sont commandés directement par le microprocesseur et d'autres organes sont commandés par des interrupteurs ou commutateurs du composant électromécanique. Cette organisation permet de minimiser le coût de réalisation du lave-linge.

La même entrée, ou les mêmes entrées, du microprocesseur peut être utilisée pour recevoir, d'une part, des signaux représentant le programme sélectionné par l'utilisateur, et d'autre part, les signaux représentant l'état d'exécution du programme. Les signaux sur cette entrée, ou sur sur ces entrées, sont alors lus de façon alternée. Le nombre d'entrées de données du microprocesseur est donc limité.

Lorsque la position d'éxécution du programme est déterminée par la position d'une ou plusieurs cames il est particulièrement avantageux, pour limiter le nombre de cames et d'interrupteurs utilisés pour cette fonction, de faire appel à des cames auxquelles sont associés des inverseurs à trois positions et d'affecter des valeurs différentes à chacune des trois positions. Par exemple quand la lame d'un inverseur est en position neutre (n'établissant aucune connexion) le chiffre binaire correspondant est "0" et quand cette lame est dans l'une et l'autre des autres positions les chiffres binaires correspondants sont respectivement "+ 1" et "- 1".

De cette manière si on fait appel à quatre inverseurs par exemple associés à une seule came ou à deux cames, le nombre de combinaisons différentes qu'il est possible d'obtenir est de 81, ce qui est en général largement suffisant pour la commande d'un lave-linge.

Dans une réalisation le microprocesseur commande les durées d'arrêt du micromoteur d'entraînement des cames, notamment les durées de non-conduction d'un interrupteur statique en série, alors que la durée de rotation de ce moteur, c'est-à-dire la durée de conduction de l'interrupteur statique, est déterminée par les états des interrupteurs ou inverseurs qui représentent la position d'éxécution du programme. Dans ce cas le microprocesseur est programmé pour que le moteur d'entraînement des cames tourne quand un changement d'état d'interrupteur ou inverseur a été détecté et pour que ce moteur s'arrête quand un temps déterminé, par exemple 300 millisecondes, s'est écoulé sans que soit intervenu un changement d'état d'interrupteur ou inverseur.

D'autres caractéristiques et avantages de l'invention apparaîtront avec la description de certains de ses modes de réalisation, celle-ci étant effectuée en se référant au dessin ci-annexé sur lequel la figure unique représente le circuit d'un programmateur selon l'invention avec certains organes du lave-linge.

Ce programmateur comprend tout d'abord un composant électromécanique qui n'a pas été représenté en détails étant d'une constitution classique.

Un tel composant électromécanique comprend un micromoteur 10 de type synchrone dont l'arbre entraîne, par exemple par l'intermédiaire d'un réducteur, des cames coaxiales coopérant par leur périphérie avec des interrupteurs, commutateurs ou inverseurs, la position angulaire de l'arbre et donc des cames déterminant l'état, ouvert ou fermé, des interrupteurs, commutateurs ou inverseurs.

Le micromoteur 10 d'entraînement des cames est en série avec un interrupteur statique 11 tel qu'un triac dont la gâchette 12 est reliée à une sortie $13_1$ d'un microprocesseur 14 qui détermine les durées de blocage et/ou de conduction de ce triac 11 et donc les durées d'immobilité et/ou de rotation du micromoteur 10.

La borne $10_2$ du moteur 10 opposée à la borne $10_1$ reliée au triac 11, est connectée à une première borne 15 d'alimentation en énergie électrique fournie par le secteur.

Par ailleurs, le triac 11 est relié, à l'opposé du moteur 10, à une première borne $16_1$ d'un commutateur ou inverseur 16 tel qu'un pressostat sensible au niveau d'eau dans la cuve du lave-linge. La borne $16_1$ est reliée à la borne commune $16_2$ du commutateur 16 lorsque le niveau d'eau est inférieur à une valeur prédéterminée $N_1$. Par contre la borne commune $16_2$ est connectée à la seconde borne $16_3$ quand le niveau est au moins égal à $N_1$. La borne commune $16_2$ du pressostat 16 est reliée à la seconde borne 17 du secteur tandis que la borne $16_3$ est également reliée à la seconde borne $11_2$ du triac 11 par l'intermédiaire d'un interrupteur 18 faisant partie du composant électromécanique, c'est-à-dire dont l'état ouvert ou fermé dépend de la position angulaire des cames du composant électromécanique, c'est-à-dire de la position angulaire de l'arbre du moteur 10.

Cette seconde borne $16_3$ du pressostat 16 est aussi connectée, d'une part, à la borne $10_1$ du moteur 10 par l'intermédiaire d'un interrupteur 19 faisant partie du composant électromécanique et, d'autre part, d'un interrupteur 20 sensible à la température qui est ouvert quand la température de l'eau est inférieure à 40° C et fermé quand la température de cette eau dépasse 40° C. La borne $16_3$ du pressostat 16 est également reliée à une borne d'une résistance 21 de chauffage de l'eau dans la cuve du lave-linge par l'intermédiaire, d'une part, d'un interrupteur 22 du composant électromécanique et, d'autre part, d'un autre interrupteur 23 sensible à une température plus élevée que l'interrupteur 20. Par exemple l'interrupteur 23 est fermé pour une température inférieure à 90° C et s'ouvre pour des températures supérieures. La borne opposée de la résistance 21 est reliée à la borne 15 du secteur.

Entre les bornes 15 et 17 est disposé l'ensemble en série du moteur 24 de la pompe de vidange de la cuve et d'un autre interrupteur 25 du composant électromécanique.

Par ailleurs la borne $16_1$ du pressostat 16 est reliée à la borne 15 par l'ensemble en série formé d'un autre interrupteur 26 du composant électromécanique, d'une électrovanne 27 et d'un commutateur ou pressostat 28 analogue au commutateur 16 mais sensible à une pression supérieure. Ce commutateur 28 présente une borne commune $28_1$ reliée directement à la borne 15 du secteur, une première borne $28_2$ reliée à l'électrovanne 27 et une seconde borne $28_3$ qui est en l'air. Quand le niveau d'eau dans la cuve est supérieur à une valeur $N_2$ prédéterminée, supérieure à la valeur $N_1$, la connexion entre les bornes $28_1$ et $28_2$ est interrompue et ainsi l'électrovanne 27 ne peut plus être alimentée.

Selon une autre disposition importante de l'invention, certains des interrupteurs ou commutateurs du composant électromécanique sont utilisés pour représenter l'état d'éxécution du programme de lavage et ces états d'interrupteurs sont transformés en signaux appliqués à des entrées respectives du microprocesseur 14.

Dans l'exemple représenté on prévoit huit interrupteurs $30_1$ , $30_2$ ... $30_8$ du composant électromécanique, par exemple associés à une ou deux cames, dont les premières bornes sont connectées à des entrées, respectivement $31_1$ , $31_2$... $31_8$ du microprocesseur 14. Les secondes bornes de ces interrupteurs 30 sont toutes reliées à une même ligne 32 connectée à une sortie $32_1$ du microprocesseur 14.

Les entrées $31_1$ à $31_6$ du microprocesseur 14 sont reliées aux premières bornes de six autres interrupteurs, respectivement $33_1$, $33_2$... $33_6$, dont les états, ouverts ou fermés, représentent chacun l'actionnement ou non d'une touche par l'utilisateur. Les secondes bornes de ces interrupteurs 33 sont toutes reliées à une ligne 34 connectée à une sortie $34_1$ du microprocesseur 14. Par exemple l'état de l'interrupteur $33_1$ représente l'état d'une touche "pleine charge" ou "demi-charge" ; l'état de l'interrupteur $33_2$ représente la position d'une touche de "programme économique" ; l'interrupteur $33_3$ est associé à une touche de "pesage" dont l'actionnement met en oeuvre le procédé de détermination de charge de linge qui est décrit dans le brevet français n° 83 16997 du 25 octobre 1983 au nom de la demanderesse; l'interrupteur $33_4$ est associé à une touche de "départ retardé 6 heures"; l'interrupteur $33_5$ est associé à une touche de "départ retardé 3 heures" et l'interrupteur $33_6$ représente l'état de la touche "arrêt cuve pleine".

Un ensemble de huit autres interrupteurs $35_1$ à $35_8$ ont leurs premières bornes reliées aux entrées respectivement $31_1$ à $31_8$ et leurs secondes bornes sont toutes reliées à une ligne 36 connectée à une sortie $36_1$ du microprocesseur 14. L'état de chacun de ces interrupteurs représente une température d'eau affichée par l'utilisateur. Par exemple quand l'interrupteur $35_1$ est fermé le programme affiché est un lavage à froid ; quand l'interrupteur $35_2$ est fermé le programme est un lavage à 30° C. La fermeture des interrupteurs $35_3$ à $35_8$ correspond à des lavages aux températures respectivement 40 , 50 , 60 , 70, 80 et 90° C.

Par ailleurs le microprocesseur 14 présente, de façon connue en soi, trois entrées 41, 42, et 43 qui reçoivent respectivement un signal de synchronisation avec le signal du secteur d'alimentation, un signal représentatif de la vitesse du moteur d'entraînement du tambour et un signal fourni par un potentiomètre (non représenté) qui représente un signal de valeur de consigne (ou valeur désirée) pour la vitesse de rotation du tambour contenant le linge.

Enfin une sortie $13_2$ du microprocesseur 14 commande un triac (non représenté) en série avec le moteur d'entraînement du tambour, une sortie $13_3$ commande l'état du commutateur déterminant le sens de rotation du moteur d'entraînement du tambour et une sortie $13_4$ commande un fusible (également non représenté) en série avec le moteur d'entrainement du tambour de façon que ce fusible soit détruit quand le moteur tourne avec une vitesse excessive.

Avant de décrire une phase de fonctionnement du lave-linge avec le programmateur selon l'invention il est important de noter que le microprocesseur 14 est programmé de façon telle que l'état des interrupteurs $30_1$ à $30_8$ détermine, avec l'état des autres interrupteurs $33_1$ à $33_6$ et $35_1$ à $35_8$ une vitesse de rotation du tambour du lave-linge grâce au signal sur la sortie $13_2$ qui fixe, par exemple à chaque période du secteur, une durée de conduction du triac en série avec le moteur d'entraînement du tambour, une cadence d'inversion du sens de rotation grâce au signal sur la sortie $13_3$ et enfin un temps pendant lequel le micromoteur 10 n'est pas alimenté ou un temps de rotation de ce micromoteur 10. Il est à noter toutefois que pour certaines séquences du lavage le temps de rotation du micromoteur 10 ou le temps séparant le début de la séquence du début de la rotation suivante du micromoteur 10 n'est pas déterminé directement par le microprocesseur. Ainsi la fin de la première phase de chauffage de l'eau de la cuve n'est pas déterminée directement par le microprocesseur mais est déterminée par l'état de l'interrupteur 20 qui se ferme quand la température de l'eau a atteint 40° C.

Dès que le programmateur est mis sous tension des signaux de lecture sont émis en séquence sur les sorties $32_1$ , $34_1$ et $36_1$. Par exemple le

signal sur la sortie $32_1$ est d'abord à "1", les signaux sur les autres sorties $34_1$ et $36_1$ étant "0", puis 10 millisecondes après le signal sur la sortie $34_1$ est à "1" et le signal sur les deux autres sorties $32_1$ , $36_1$ est "0" ; enfin 10 millisecondes encore après c'est le signal sur la sortie $36_1$ qui est à "1" et les signaux sur les sorties $34_1$ et $32_1$ sont à "0".

Quand le signal sur la sortie $32_1$ est "1" le signal sur l'entrée $31_1$ est "1" si l'interrupteur $30_1$ est fermé et "0" si cet interrupteur $30_1$ est ouvert. De même les signaux sur les autres entrées $31_2...31_8$ sont soit "1", soit "0" selon l'état, fermé ou ouvert, des interrupteurs correspondants $30_2$ à $30_8$ .

Quand le signal sur la sortie $34_1$ a la valeur 1 les entrées $31_1...31_6$ sont à 1 ou à 0 selon l'état, fermé ou ouvert, des interrupteurs $33_1$ à $33_6$ . Enfin quand la sortie $36_1$ est à 1 les entrées 31 reçoivent des signaux de valeur 1 ou 0 représentant l'état, fermé ou ouvert, des interrupteurs $35_1$ à $35_8$ .

La lecture des états des interrupteurs 30 représentant l'état d'exécution du programme et la lecture des états des interrupteurs 33 et 35 représentant les commandes affichées par l'utilisateur est effectuée de façon multiplexée, la période de lecture étant par exemple, comme décrit, de 30 millisecondes.

A titre d'exemple on décrit ici le fonctionnement du lave-linge au début d'une exécution de programme.

A la mise sous tension le programme est composé par l'utilisateur, ce qui détermine l'état des interrupteurs 33 et 35 tandis que l'état des interrupteurs 30 indique que le programme n'a pas encore été exécuté. Si l'interrupteur $33_5$ représente une commande de départ retardé, par exemple pendant une durée de 3 heures, le microprocesseur 14 démarre une horloge qui interdit le début de l'exécution du programme pendant ces 3 heures. A ce stade la cuve étant vide les bornes $16_1$ et $16_2$ sont reliées entre elles, de même que les bornes $28_1$ et $28_2$ et les interrupteurs du composant électromécanique qui sont en série avec des organes actifs du lave-linge sont ouverts. Il s'agit, dans l'exemple, des interrupteurs 18 , 19 , 22 , 25 et 26. A ce stade l'interrupteur 20 est ouvert et l'interrupteur 23 est fermé.

Quand la durée de 3 heures s'est écoulée le microprocesseur 14 commande la fermeture du triac 11 de façon à faire tourner le moteur 10. Après cette rotation les interrupteurs 26 , 19 et 22 sont fermés. L'ouverture du triac 11 est commandée par le microprocesseur de la façon suivante : quand un signal sur une entrée 31 a changé de valeur, la conduction du triac se poursuit pendant un temps déterminé, 300 millisecondes dans l'exemple, et le blocage (ouverture) de ce triac intervient si, au bout de ces 300 millisecondes, aucun autre signal n'a changé de valeur sur l'entrée 31.

L'interrupteur 26 étant fermé l'électrovanne 27 est alimentée et la cuve du lave-linge se remplit d'eau. Quand le niveau dans cette cuve a atteint la valeur $N_1$ le pressostat 16 change de position et ce sont alors les bornes $16_2$ et $16_3$ qui sont reliées entre elles. Dans cet état le micromoteur 10 n'est pas alimenté car l'interrupteur 20 est ouvert, la température de l'eau étant inférieure à 40° C. Par contre la résistance de chauffage de l'eau 21 est alimentée.

Quand la température de l'eau a atteint 40° C l'interrupteur 20 se ferme, l'interrupteur 19 étant alors fermé le micromoteur 10 est alimenté (indépendamment de l'état de conduction du triac 11).

Au cours du remplissage en eau le tambour tourne par exemple à une vitesse de 30 tours/minutes et la cadence d'inversion du sens de rotation de ce tambour est élevée. Après le remplissage, la vitesse de rotation du tambour est plus élevée alors que la cadence d'inversion du sens de rotation est moins importante.

Le micromoteur 10 étant alimenté par l'intermédiaire des interrupteurs 20 et 19 sa rotation entraîne le passage à un pas suivant pour lequel les interrupteurs 19, 22 et 26 sont ouverts et l'interrupteur 18 est fermé. Par la lecture des états des interrupteurs 30 , 33 et 35 le microprocesseur détermine que le linge doit être brassé pendant une durée déterminée (se trouvant dans le programme du microprocesseur 14), et que la vitesse de rotation du tambour et la cadence d'inversion ont une valeur déterminée (par les signaux sur les sorties $13_2$ et $13_3$).

A l'issue de cette période de brassage qui dure, par exemple, dix minutes, le triac 11 est rendu conducteur, ce qui permet l'alimentation du moteur 10 par l'intermédiaire de l'interrupteur 18 et du trajet conducteur $16_3$ , $16_2$. Dans la nouvelle configuration qui résulte de l'alimentation de ce moteur 10 l'interrupteur 18 s'ouvre et l'interrupteur 25 se ferme. Il en résulte la vidange de la cuve du lave-linge par l'alimentation du moteur d'entraînement de la pompe de vidange.

Le programme du microprocesseur 14 est tel que si une modification des états des interrupteurs 30 , 33 , 35 intervient celle-ci n'est prise en compte qu'après deux ou trois cycles de lecture, afin de s'affranchir des signaux parasites.

En cas de panne du secteur d'alimentation l'état d'exécution du programme de lavage est gardé en mémoire par l'état des interrupteurs 30, c'est-à-dire par la position angulaire de l'arbre du moteur 10.

Si le micro-processeur 14, par le signal appliqué sur son entrée 42, détecte une vitesse excessive de rotation du tambour du lave-linge provoquée par exemple par un court-circuit du triac en série avec le moteur d'entrainement de ce tambour, le micro-moteur 10 est alors alimenté, par la mise en conduction du triac 11, de façon à ouvrir un interrupteur du composant électro-mécanique en série avec le moteur d'entrainement du tambour. On réalise ainsi avec une grande simplicité une sécurité interrompant l'alimentation en énergie du moteur électrique en cas de court-circuit du triac en série avec ce moteur d'entrainement du tambour.

Il n'est pas nécessaire de décrire plus en détails le fonctionnement du lave-linge car, pour les autres opérations, le câblage et la programmation du microprocesseur 14 sont des opérations courantes, à la portée de l'homme de métier.

Dans le lave-linge comportant un programmateur qui vient d'être décrit le nombre de relais est limité.

Par rapport à un programmateur du type uniquement électromécanique, le programmateur selon l'invention présente un câblage plus simple des fils des signaux de puissance.

De plus le nombre d'états ou de pas de programme de commande du lave-linge peut être sensiblement plus important qu'avec un tel programmateur uniquement électromécanique. En effet, dans ce dernier cas, il est nécessaire que le passage d'un état à un autre, c'est-à-dire d'une configuration d'interrupteurs à une autre configuration de ces interrupteur, s'effectue en un temps supérieur à un seuil déterminé, par exemple 7,5 secondes qui correspond au temps maximum de passage d'une configuration à une autre. Avec l'invention, comme on l'a vu précédemment, on peut s'affranchir de ce seuil étant donné que le passage d'un pas à un autre est détecté sur les entrées 31 par les changements d'état des interrupteurs ou commutateurs 30. Autrement dit le passage d'un pas à un autre peut être d'une durée sensiblement inférieure, ce qui permet le résultat mentionné ci-dessus le nombre d'états ou de pas que l'on peut prévoir avec le programmateur selon l'invention est important. De ce fait on peut faire intervenir des opérations supplémentaires. Par exemple avec un programmateur classique il arrive souvent que plusieurs interrupteurs soient actionnés simultanément ou quasi simultanément, ce qui peut occasionner des parasites radioélectriques émis sur le réseau; avec l'invention il est possible, d'augmenter le temps séparant l'actionnement de deux interrupteurs et donc de minimiser les risques d'émission de parasites.

Par ailleurs, comme l'intervalle entre deux pas correspond à un angle de rotation de l'arbre d'entrainement des cames sensiblement plus faible qu'avec un programmateur classique, cet arbre peut tourner plus rapidement, c'est-à-dire que le réducteur entre le moteur et l'arbre sur lequel sont montées les cames peut être simplifié ou même supprimé. En d'autres termes l'arbre du moteur 10 peut entrainer directement l'arbre portant les cames. Enfin on peut supprimer certains mécanismes qui assurent la sécurité du passage de pas à un autre qu'on trouve dans la plupart des programmateurs à cames.

## Revendications

1. Programmateur de commande du fonctionnement d'un lave-linge comprenant un composant électro-mécanique à moteur électrique (10), par exemple du type synchrone, entraînant des cames coopérant avec des interrupteurs ou commutateurs dont l'état dépend de la position angulaire des cames et un microprocesseur (14) commandant une partie des durées d'arrêt et/ou de fonctionnement du moteur (10) d'entraînement des cames pour déterminer la durée de fonctionnement d'au moins certaines opérations du lave-linge, au moins une partie ($30_1$ à $30_8$) des interrupteurs ou commutateurs du composant électromécanique ayant pour seule fonction de représenter l'état d'exécution du programme de lavage et, à cet effet, sont branchés pour appliquer, sur des entrées ($31_1$ à $31_8$) du microprocesseur (14) des signaux qui représentent, selon leur état, ledit état d'exécution, caractérisé en ce que le microprocesseur commande directement des organes du lave-linge tel que le moteur d'entraînement du tambour

2. Programmateur selon la revendication 1, caractérisé en ce qu'une partie des interrupteurs du composant électromécanique commandent l'alimentation en énergie électrique d'organes du lave-linge.

3. Programmateur selon la revendication 1 ou 2, caractérisé en ce que le microprocesseur (14) commande l'état et la durée de conduction d'un interrupteur statique (11) en série avec le moteur (10) d'entraînement des cames.

4. Programmateur selon la revendication 1, caractérisé en ce qu'une borne de chacun des interrupteurs ($30_1$, $30_8$) représentant la position d'exécution du programme est reliée à une entrée correspondante ($31_1$, $31_8$) du microprocesseur (14), les secondes bornes de ces interrupteurs étant toutes reliées à une sortie ($32_1$) dudit microprocesseur.

5. Programmateur selon la revendication 1 ou 4, caractérisé en ce que les entrées (31) du microprocesseur recevant les signaux des interrupteurs (30) ou commutateurs représentant l'état d'avancement du programme de lavage sont également utilisées pour recevoir des signaux représentant le programme sélectionné par l'utilisateur, le signaux sur ces entrées (31) étant lus de façon multiplexée.

6. Programmateur selon les revendications 4 et 5, caractérisé en ce que le programme sélectionné est représenté par l'état d'interrupteurs (33, 35) dont une première borne de chacun est reliée à une entrée correspondante ($31_1$, $31_8$) du microprocesseur et dont les secondes bornes sont reliées à une seconde sortie ($34_1$ ou $36_1$) dudit microprocesseur (14), des signaux de lecture étant engendrés de façon multiplexée sur la première ($32_1$) et sur la seconde ($34_1$) sorties.

7. Programmateur selon l'une quelconque des revendications précédentes, caractérisé en ce que le microprocesseur (14) détermine la vitesse de rotation du tambour et/ou la cadence d'inversion du sens de rotation de ce tambour ainsi que les temps d'arrêt de ce dernier.

8. Programmateur selon la revendication 1, caractérisé en ce que l'état d'exécution du programme de lavage est représenté par des inverseurs à trois positions, la position neutre correspondant au chiffre 0 et les autres positions aux chiffres respectivement +1 et -1.

9. Programmateur selon la revendication 8, caractérisé en ce que le nombre d'inverseurs utilisés pour représenter l'état d'exécution du programme de lavage est égal à 4.

10. Programmateur selon la revendication 1, caractérisé en ce que les durées d'arrêt du moteur (10) d'entraînement des cames sont déterminées par le microprocesseur, et la commande de la rotation de ce moteur par le microprocesseur est telle que celui-ci tourne pendant un temps déterminé, par exemple 300 millisecondes, après qu'ait été détecté un changement d'état d'interrupteur ou commutateur représentant l'état d'exécution du programme de lavage, le moteur s'arrêtant au bout de ce temps déterminé si aucun autre changement d'état n'est intervenu pendant ce temps.

11. Programmateur selon la revendication 3, caractérisé en ce qu'en parallèle sur l'interrupteur statique (11) est disposé l'ensemble en série d'un interrupteur (19) du composant électromécanique et d'un interrupteur (20) sensible à la température qui se ferme quand une température déterminée de l'eau dans la cuve a été atteinte.

12. Programmateur selon la revendication 2, caractérisé en ce que les interrupteurs du composant qui commandent l'alimentation des organes du lave-linge comprennent un interrupteur (26) en série avec une électrovanne (27), un interrupteur (22) en série avec une résistance (21) de chauffage de l'eau de la cuve, et un interrupteur (25) en série avec le moteur d'entraînement de la pompe de vidange.

13. Programmateur selon la revendication 1, caractérisé en ce qu'une modification des signaux sur les entrées (31) du microprocesseur (14) n'est prise en compte qu'après un nombre déterminé de lectures de ces signaux d'entrée.

14. Programmateur selon l'une quelconque des revendications précédentes, caractérisé en ce que le moteur électrique (10) du composant électromécanique est monté directement sur l'arbre portant les cames.

15. Programmateur selon l'une quelconque des revendications précédentes, caractérisé en ce qu'il est agencé de façon telle que plusieurs interrupteurs du composant électromécanique ne puissent être actionnés simultanément afin de minimiser les risques d'émission de parasites radio-électriques sur le réseau.

16. Programmateur selon l'une quelconque des revendications précédentes, caractérisé en ce qu'un interrupteur statique, tel qu'un triac, étant en série avec le moteur d'entraînement du tambour, la conduction de cet interrupteur statique étant commandée directement par le microprocesseur, un interrupteur du composant électromécanique est également en série avec le moteur d'entraînement du tambour, ce dernier interrupteur étant ouvert en cas de détection de vitesse excessive de rotation du tambour.

**Claims**

1. A programmer for controlling the operation of a washing machine comprising an electro-mechanical component with an electric motor (10), for example of the synchronous type, driving cams cooperating with circuit breakers or selector switches the state of which depends on the angular position of the cams and a microprocessor (14) controlling part of the stop and/or operation of the drive motor (10) of the cams to determine the operating time of at least some of the operations of the washing machine, at least part ($30_1$ to $30_8$) of the circuit breakers or selector switches of the electro-mechanical component having the sole function of representing the state of execution of the wash programme and, for this purpose, being connected so as to apply, at the inputs ($31_1$ to $31_8$) of the microprocessor (14), signals which, according to their state, represent said state of execution, characterised in that the microprocessor directly controls elements of the washing machine such as the drive motor of the drum.

2. A programmer according to claim 1, characterised in that part of the circuit breakers of the electro-mechanical components control the electrical power supply to the elements of the washing machine.

3. A programmer according to claim 1 or 2, characterised in that the microprocessor (14) controls the state and conduction time of a static circuit breaker (11) in series with the drive motor (10) of the cams.

4. A programmer according to claim 1, characterised in that one terminal of each of the circuit breakers ($30_1$ to $30_8$) representing the position for executing the programme is connected to a corresponding input ($31_1$ to $31_8$) of the microprocessor (14), the second terminals of these circuit breakers all being connected to an output ($32_1$) of said microprocessor.

5. A programmer according to claim 1 or 4, characterised in that the inputs (31) of the microprocessor receiving signals from the circuit breakers (30) or selector switches representing the state of progress of the wash programme are also used to receive signals representing the programme selected by the user, the signals at these inputs (31) being read in a multiplexed manner.

6. A programmer according to claims 4 and 5, characterised in that the programme selected is represented by the state of the circuit breakers (33,35), a first terminal of each of which is connected to a corresponding input ($31_1$, $31_8$) of the microprocessor and the second terminals of which are connected to a second output ($34_1$ or $36_1$) of said microprocessor (14), reading signals being generated in a multiplexed manner at the first ($32_1$) and second

($34_1$) outputs.

7. A programmer according to any one of the preceding claims, characterised in that the microprocessor (14) which determines the drum rotation speed and/or the rate at which the rotation direction of this drum is reversed, and also the stop time of the latter.

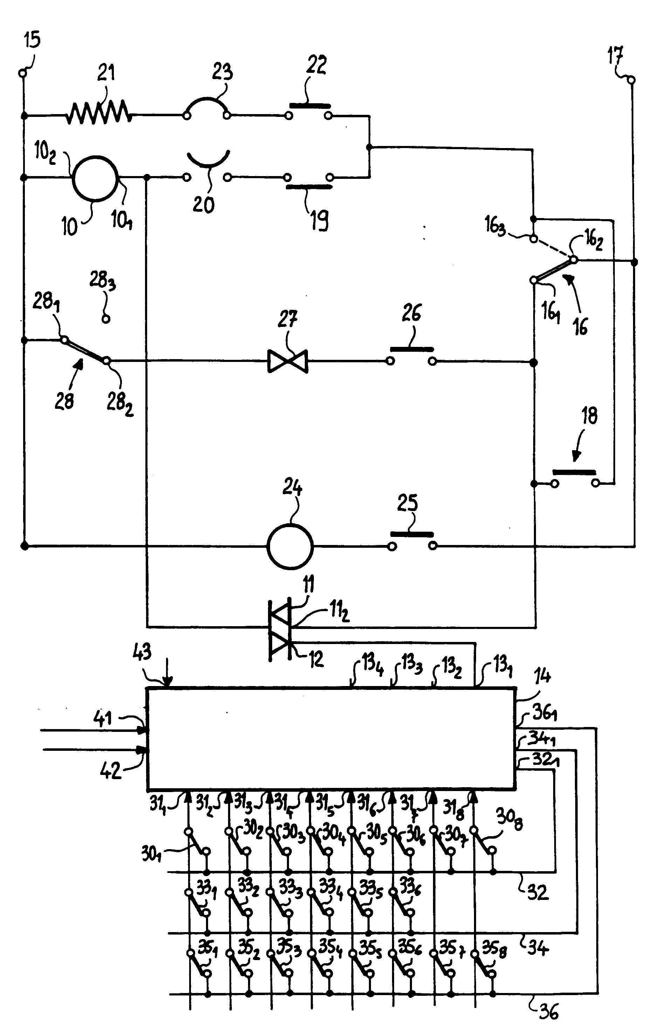

8. A programmer according to claim 1, characterised in that the state of execution of the wash programme is represented by three-position changeover switches, the neutral position corresponding to the figure 0 and the other positions to the figures +1 and -1 respectively.

9. A programmer according to claim 8, characterised in that the number of changeover switches used to represent the state of execution of the wash programme is equal to 4.

10. A programmer according to claim 1, characterised in that the stop times of the drive motor (10) of the cams are determined by the microprocessor, and the rotation of this motor is controlled by the microprocessor in such a way that the latter runs for a predetermined time, for example 300 milliseconds, after it has detected a change of state of the circuit breaker or selector switch representing the state of execution of the wash programme, the motor stopping at the end of this predetermined time if no other change of state takes place during this time.

11. A programmer according to claim 3, characterised in that in parallel, on the static circuit breaker (11), is disposed the assembly in series of a circuit breaker (19) of the electro-mechanical component and a temperature-sensitive circuit breaker (20) which is closed when a predetermined temperature of the water in the tank has been reached.

12. A programmer according to claim 2, characterised in that the circuit breakers of the component which control the power supply to the washing machine elements comprise a circuit breaker (26) in series with an electro-valve (27), a circuit breaker (22) in series with a resistor (21) for heating the water in the tank, and a circuit breaker (25) in series with the drive motor for the drain pump.

13. A programmer according to claim 1, characterised in that a modification to the signals at the inputs (31) of the microprocessor (14) is only taken into account after a predetermined number of readings of these input signals.

14. A programmer according to any one of the preceding claims, characterised in that the electric motor (10) of the electro-mechanical component is mounted directly on the shaft carrying the cams.

15. A programmer according to any one of the preceding claims, characterised in that it is arranged in such a way that several of the circuit breakers of the electro-mechanical component cannot be activated simultaneously in order to minimise the risks of emitting radio-electrical interference over the network.

16. A programmer according to any one of the preceding claims, characterised in that a static circuit breaker, such as a triac, being in series with the drive motor of the drum and the conduction of this static circuit breaker being directly controlled by the microprocessor, a circuit breaker of the electro-mechanical component is also in series with the drive motor of the drum, the latter circuit breaker being opened when excessive rotation speed of the drum is detected.

**Patentansprüche**

1. Programmsteuergerät für den Betrieb einer Waschmaschine, das ein elektromechanisches Bauteil mit einem Elektromotor (10), beispielsweise vom Synchron-Typ, der Nocken antreibt, die mit Schaltern oder Umschaltern zusammenwirken, deren Schaltzustand von der Winkelstellung der Nocken abhängt, und einen Mikroprozessor (14) aufweist, der einen Teil der Haltedauer und/oder des Laufs des Nockenantriebsmotors (10) steuert, um die Wirkungsdauer wenigstens bestimmter Betriebzweisen der Waschmaschine zu bestimmen, wobei wenigstens ein Teil ($30_1$ bis $30_8$) der Schalter oder Umschalter des elektromechanischen Bauteils die einzige Funktion haben, den Ausführungszustand des Waschprogramms zu repräsentieren, und die zu diesem Zweck so angeschlossen sind, daß sie an Eingänge ($31_1$ bis $31_8$) des Mikroprozessors (14) anlegen können, welche je nach ihrem Zustand den Ausfuhrungszustand repräsentieren, dadurch gekennzeichnet, daß der Mikroprozessor (14) Waschmaschinenelemente wie den Trommelantriebsmotor direkt steuert.

2. Programmsteuergerat nach Anspruch 1, dadurch gekennzeichnet, daß ein Teil der Schalter des elektromechanischen Bauteils die Versorgung der Waschmaschinenelemente mit elektrischer Energie steuert.

3. Programmsteuergerät nach Anspruch 1 oder 2, dadurch gekennzeichnet, daß der Mikroprozessor (14) den Leitzustand und die Leitdauer eines statischen Schalters (11) steuert, der mit dem Nockenantriebsmotor (10) in Reihe liegt.

4. Programmsteuergerät nach Anspruch 1, dadurch gekennzeichnet, daß ein Anschluß jedes der die Einstellung der Programmausführposition repräsentierenden Schalters ($30_1$, $30_8$) mit einem entsprechenden Eingang ($31_1$, $31_8$) des Mikroprozessors (14) verbunden ist, wobei alle zweiten Anschlüsse dieser Schalter mit einem Ausgang ($32_1$) des Mikroprozessors verbunden sind.

5. Programmsteuergerät nach Anspruch 1 oder 4, dadurch gekennzeichnet, daß die Eingänge (31) des Mikroprozessors, die die Signale der Schalter (30) oder Umschalter, die den Ablaufzustand des Waschprogramms repräsentieren, empfangen, gleichfalls zum Empfang der Signale dienen, die das vom Anwender gewählte Programm repräsentieren, und daß die Signale an diesen Eingängen (31) in Multiplexform gelesen werden.

6. Programmsteuergerät nach Anspruch 4 und 5, dadurch gekennzeichnet, daß das gewählte Programm durch den Schaltzustand von Schaltern (33, 35) gebildet ist, von deren ersten Anschlüssen jeder mit einem entsprechenden Eingang ($31_1$, $31_8$) des Mikroprozessors verbunden ist und deren zweite Anschlüsse mit einem zweiten Ausgang ($34_1$ oder $36_1$) des Mikroprozessors (14) verbunden sind, wobei die Lesesignale in Multiplexform am ersten ($32_1$) und am zweiten ($34_1$) Ausgang erzeugt sind.

7. Programmsteuergerat nach einem der vorstehenden Ansprüche, dadurch gekennzeichnet, daß der Mikroprozessor (14) die Drehgeschwindigkeit der Trommel und/oder die Folge der Drehrichtungsumkehr sowie die Stillstandszeiten der Trommel bestimmt.

8. Programmsteuergerat nach Anspruch 1, dadurch gekennzeichnet, daß der Ausführungszustand des Waschprogramms durch Schalter mit drei Stellungen gebildet ist, wobei die Neutralstellung der Ziffer 0 entspricht und die anderen Stellungen jeweils den Ziffern + 1 und -1 entsprechen.

9. Programmsteuergerät nach Anspruch 8, dadurch gekennzeichnet, daß die Anzahl der Schalter, die dazu dienen, den Ausführungszustand des Waschprogramms zu repräsentieren, gleich 4 ist.

10. Programmsteuergerät nach Anspruch 1, dadurch gekennzeichnet, daß die Stillstandszeiten des Nockenantriebsmotors (10) durch den Mikroprozessor bestimmt sind und daß die Steuerung der Drehung dieses Motors durch den Mikroprozessor so ist, daß er sich während einer bestimmten Zeit, beispielsweise 300 Millisekunden, dreht, nachdem eine Zustandsänderung des Schalters oder Umschalters, der den Ausführungszustand des Waschprogramms repräsentiert, festgestellt worden ist, wobei der Motor nach Ablauf dieser bestimmten Zeit anhält, wenn während dieser Zeit keine andere Zustandsänderung eingetreten ist.

11. Programmsteuergerät nach Anspruch 3, dadurch gekennzeichnet, daß parallel zum statischen Schalter (11) eine Reihenschaltung eines Schalters (19) des elektromechanischen Bauteils und eines temperaturempfindlichen Schalters (20), der sich schließt, wenn eine bestimmte Wassertemperatur im Trog erreicht ist, angeordnet ist.

12. Programmsteuergerät nach Anspruch 2, dadurch gekennzeichnet, daß die Schalter des Bauteils, die die Versorgung der Waschmaschinenelemente steuern, einen mit einem Magnetventil (27) in Reihe liegenden Schalter (26), einen mit einem Heizwiderstand (21) für das Wasser im Trog in Reihe liegenden Schalter (22) und einen mit dem Antriebsmotor der Ablaufpumpe in Reihe liegenden Schalter (25) umfassen.

13. Programmsteuergerät nach Anspruch 1, dadurch gekennzeichnet, daß eine Änderung der Signale an den Eingängen (31) des Mikroprozessors (14) erst nach einer bestimmten Anzahl von Lesevorgängen dieser Eingangssignale berücksichtigt wird.

14. Programmsteuergerät nach einem der vorstehenden Ansprüche, dadurch gekennzeichnet, daß der Elektromotor (10) des elektromechanischen Bauteils direkt an einer die Nocken tragenden Welle angebracht ist.

15. Programmsteuergerät nach einem der vorstehenden Ansprüche, dadurch gekennzeichnet, daß es in der Weise eingerichtet ist, daß mehrere Schalter des elektromechanischen Bauteils nicht gleichzeitig tätig sein können, um die Gefahren der Aussendung störender Funksignale über das Stromnetz möglichst klein zu halten.

16. Programmsteuergerät nach einem der vorstehenden Ansprüche, dadurch gekennzeichnet, daß ein statischer Schalter, etwa ein Triac, mit dem Trommelantriebsmotor in Reihe liegt, wobei der Leitzustand dieses statischen Schalters direkt durch den Mikroprozessor gesteuert ist, und daß ein Schalter des elektromechanischen Bauteils gleichfalls mit dem Trommelantriebsmotor in Reihe liegt, wobei letzterer Schalter im Falle des Nachweises einer übermäßigen Drehgeschwindigkeit der Trommel geöffnet ist.